# EUROPEAN PATENT APPLICATION

(11) **EP 4 566 992 A1**
(43) Date of publication of application: **11.06.2025**
(21) Application number: 24217665.9
(22) Date of filing: 05.12.2024
(51) Int. Cl.: C01C 1/04, B01J 8/04

(54) **AMMONIA SYNTHESIS SYSTEM AND METHOD USING THE SAME**

(30) Priority: 06.12.2023 KR 20230175348
(71) Applicant: SK Innovation Co., Ltd., Seoul 03188 (KR)
(72) Inventor: LEE, Jun Young, Daejeon 34124 (KR); SONG, Da Eun, Daejeon 34124 (KR); IM, Ju Hwan, Daejeon 34124 (KR); JEONG, Jae Hun, Daejeon 34124 (KR); KIM, Sun Kug, Daejeon 34124 (KR); KIM, Ye Jin, Daejeon 34124 (KR)
(74) Representative: Prüfer & Partner mbB Patentanwälte · Rechtsanwälte

(57) **Abstract**

Provided is an ammonia synthesis system including an ammonia synthesis reactor; at least two catalyst beds included in the ammonia synthesis reactor; a backflow prevention plate disposed downstream from each one of the catalyst beds, optionally except for the catalyst bed disposed at the lowest of the at least two catalyst beds, for preventing a backflow of mixed gas; a distribution device disposed upstream from each one of the at least two catalyst beds for distributing the mixed gas to the catalyst bed; mixed gas supply lines arranged to supply the mixed gas to each distribution device; and a microwave heating device for emitting microwaves to each of the at least two catalyst beds.

## Description

### TECHNICAL FIELD

The present disclosure relates generally to an ammonia synthesis system, and in particular to an ammonia synthesis system particularly suited for using a feed gas generated with energy from a renewable energy power source. It also relates to a method for synthesizing ammonia in an ammonia synthesis system.

### BACKGROUND

There is an increasing need for renewable energy to achieve a greenhouse gas reduction to cope with climate change and depletion of oil resources. However, regions that meet an appropriate condition for renewable energy production are scattered, and it is thus essential to look for ways and means for storing and transporting renewable energy. For example, renewable energy, which is abundant in the equatorial and southern hemisphere areas, is required to be transported to the northern hemisphere where renewable energy is highly demanded.

In addition, renewable energy has temporal variability, thus making an electric storage device essential. Ammonia is spotlighted as an energy carrier to solve the problems occurring from the area ubiquity and temporal variability of renewable energy. In particular, ammonia may be liquefied at room temperature and a pressure of 8.5 atmospheres or lower, and thus be stored and transported more easily than hydrogen. Therefore, as an alternative to solve the problems occurring from the area ubiquity and temporal variability of renewable energy, there is a need for synthesizing ammonia from hydrogen and nitrogen which are produced using electricity from renewable energy.

For example, hydrogen, one of the main raw material for the ammonia synthesis, may be produced by a water electrolyzer powered by renewable energy such as solar or wind energy. One issue that needs to be addressed is that renewable energy, such as, for example, solar energy or wind energy is not constant or available at all times. Therefore, the amount of hydrogen (e.g., flow rate) provided by a process using renewable solar or wind energy may vary or fluctuate significantly and, hence, an ammonia synthesis system using such hydrogen cannot be operated at a constant flow rate. Such changes may have a negative impact on the overall efficiency of the ammonia synthesis system.

In addition, a flow rate distribution upstream of a catalyst bed included in an ammonia synthesis reactor may get more or less uniform when a flow rate of the raw material such as hydrogen fed into the ammonia synthesis system decreases or increases.

In addition, in a conventional ammonia synthesis system, a temperature deviation may occur between the central and outer parts of the catalyst bed especially at the beginning of its operation, which may reduce an ammonia synthesis yield.

Therefore, there is a need for an ammonia synthesis system which can operate efficiently with hydrogen from a renewable energy process. The ammonia synthesis system will need to be able to cope with the changes in the flow rate that occurs during the production cycle, while solving the problems of the non-uniform flow rate distribution that occurs upstream of the catalyst bed and the reduced ammonia synthesis yield caused by the temperature deviation between the central and outer parts of the catalyst bed at the beginning of the operation (i.e. a specific temperature distribution in the catalyst bed).

### SUMMARY

An embodiment of the present disclosure is directed to providing an ammonia synthesis system which may cope with a change in a flow rate that occurs during a production cycle.

Another embodiment of the present disclosure is directed to providing an ammonia synthesis system which may maintain a uniform flow rate distribution upstream of a catalyst bed included in an ammonia synthesis reactor even when a flow rate of a raw material, such as hydrogen, fed into the ammonia synthesis system is decreased.

Still another embodiment of the present disclosure is directed to providing an ammonia synthesis system which may improve an ammonia synthesis yield by enabling a temperature deviation between the central and outer parts of a catalyst bed to be uniform at the beginning of its operation (i.e. a homogeneous tenperature distribution).

An embodiment of the present disclosure is directed to providing an ammonia synthesis system which may improve an ammonia synthesis yield at the beginning of its operation by preheating a catalyst bed at the beginning of its operation.

An embodiment of the present disclosure is directed to providing an ammonia synthesis system which may save energy by optimizing an amount of energy required by the system during its operation.

An embodiment of the present disclosure is directed to providing an ammonia synthesis system which may increase a catalyst replacement cycle by uniformly using each catalyst bed during the operation.

Another embodiment of the present disclosure is directed to an ammonia synthesis system employing a hydrogen feed, e.g. produced from a renewable energy process, i.e., a process using renewable energy such as, for eample, solar, wind, and the like for producing the hydrogen, wherein the hydrogen feed may have large variations in flow rate, e.g. because of the temporal variability of the renewable energy.

According to an embodiment of the present disclosure, there is provided an ammonia synthesis system including an ammonia synthesis reactor; at least two catalyst beds (i.e., two or more catalyst beds) included in the ammonia synthesis reactor; a backflow prevention plate disposed downstream from each one of the catalyst beds, optionally except for the catalyst bed disposed at the lowest of the two or more catalyst beds, for preventing a backflow of mixed gas; a distribution device disposed upstream from each one of the at least two catalyst beds for distributing the mixed gas to each one of the at least two catalyst beds; mixed gas supply lines arranged to supply the mixed gas to each distribution device; and a microwave heating device for emitting microwaves to each of the at least two catalyst beds.

The system may further include distribution plates each disposed between the catalyst bed and the distribution device.

The system may further include a plurality of mixed gas flow pipes which are fixed to a lower surface of the distribution plate and through which the mixed gas flows.

The mixed gas flow pipe may have a bottom surface and a side surface connecting the bottom surface with the distribution plate, a plurality of upper openings may be formed in a side surface of an upper part of the mixed gas flow pipe spaced apart from each other along a circumference of the pipe, a plurality of middle openings may be formed in a side surface of a middle part of the mixed gas flow pipe spaced apart from each other along the circumference, a plurality of lower openings may be formed in a side surface of a lower part of the mixed gas flow pipe spaced apart from each other along the circumference, and the mixed gas flow pipe may include a cover surrounding at least some regions of the side surface of the mixed gas flow pipe to provide a space for a fluid flowing out of the side surface of the mixed gas flow pipe after passing through the upper opening to be guided toward the middle opening.

The mixed gas flow pipe may further include a separator plate dividing the upper and middle parts of the mixed gas flow pipe from each other.

Each of the mixed gas supply lines may include a flow regulating device.

Each of the backflow prevention plates may include a plurality of openings, and each of the plurality of openings included in each of the backflow prevention plates may have a backflow prevention cap selectively opened based on a flow direction of the gas.

The backflow prevention cap may be coupled to a hinge disposed at a position on each circumference part of the plurality of openings included in each of the backflow prevention plates.

A coupling part of the hinge that is coupled to the hinge may include a spring to apply an elastic force in a direction in which the backflow prevention cap approaches the distribution plate.

The distribution device may have a disk shape or a toroidal shape.

A further aspect of the present disclosure relates to a method for synthesizing ammonia using the ammonia synthesis system disclosed herein.

Ammonia may be synthesized in the ammonia synthesis system and in the method at 10 to 300 bar.

Ammonia may be synthesized in the ammonia synthesis system and in the method at 200 to 700°C.

The system may further include a heat exchanger disposed downstream from each of the at least two catalyst beds to remove heat from an effluent of the catalyst bed.

According to an embodiment of the present disclosure, there is provided an ammonia synthesis system utilizing a mixed gas feed generated at least partially via a process using renewable energy, the ammonia synthesis system comprising:
a eco-friendly process for making hydrogen using renewable energy,
an ammonia synthesis reactor comprising first and second catalyst beds and receiving a first mixed gas comprising the made hydrogen from the eco-friendly process;
a first backflow prevention plate disposed downstream from the first catalyst bed for preventing a backflow of the mixed gas;
a distribution device disposed upstream from each one of the first and second catalyst beds for distributing the mixed gas to each one of the first and second catalyst beds;
a first mixed gas supply line and a second mixed gas supply line configured to supply the mixed gas to the first and second catalyst beds respectively; and
a microwave heating device for emitting microwaves to each of the at least two catalyst beds.

Other features and aspects will be apparent from the following detailed description, the drawings, and the claims.

### BRIEF DESCRIPTION OF THE DRAWINGS

FIG. 1 is a schematic view showing an ammonia synthesis system according to an embodiment of the present disclosure.
FIG. 2 is a schematic view showing an ammonia synthesis system according to an embodiment of the present disclosure.
FIG. 3 is a perspective view showing a distribution plate and a mixed gas flow pipe according to an embodiment of the present disclosure.
FIG. 4 is a perspective view showing the inside of the mixed gas flow pipe according to an embodiment of the present disclosure.
FIG. 5 is a perspective view showing the inside of a mixed gas flow pipe according to another embodiment of the present disclosure.
FIG. 6 is a view showing a state where a backflow prevention cap of a backflow prevention plate is closed according to an embodiment of the present disclosure.
FIG. 7 is a view showing a state where the backflow prevention cap of the backflow prevention plate is opened according to an embodiment of the present disclosure.

### DETAILED DESCRIPTION

Various advantages and features of the embodiments of the present disclosure and methods for accomplishing the same will become apparent to the skilled person of the art from the embodiments and examples described in detail below. However, it is noted that the embodiments of the present disclosure are not limited only to the embodiments and examples disclosed below, but may be implemented in various different forms. These embodiments and examples are provided only for making the present disclosure complete and for allowing those skilled in the art to fully appreciate the scope of the present disclosure as defined by the claims.

Unless defined otherwise, all terms (including technical and scientific terms) used in the specification have the same meanings as meanings commonly understood by those skilled in the art to which the present disclosure pertains.

Terms of a singular number used in the specification may be interpreted as including its plural number unless otherwise indicated.

A numerical range used in the specification may include the lower and upper limits and all values within that range, increments logically derived from the shape and width of the defined range, all values delimited by those limits, and all possible combinations of the upper and lower limits of a numerical range delimited by different shapes. The defined numerical range may also include values outside the numerical range, which may occur due to experimental errors or rounding of values unless otherwise specified in the specification.

A term "to include" ot "to comprise" in the specification is a comprehensive description that has the meaning equivalent to an expression such as "to include", "to comprise", "to contain", "to have", or "to be featured", and does not exclude an element, a material, or a process that is not additionally enumerated.

Unless otherwise indicated, a unit of % used in the specification may indicate % by weight.

The terms "upper", "middle" and "lower", or "lowest" generally means a spatial distribution in a longitudinal direction of the system; these terms may refer to a separation of the corresponding element in a direction of stream (downstream or upstream), regardless whether a system having a certain longitudinal shape is arranged in an upward/vertical orientation or in a horizontal orientation or in another orientation.

In the specification, "A to B" indicates "A or more and B or less" unless otherwise specifically defined.

Hereinafter, an ammonia synthesis system of the present disclosure is described in detail. However, the embodiments are only illustrative, and the present disclosure is not limited to the specific embodiments described.

The embodiments of the present disclosure may provide an ammonia synthesis system including an ammonia synthesis reactor; at least two catalyst beds included in the ammonia synthesis reactor; a backflow prevention plate disposed downstream from each one of the catalyst beds, optionally except for the catalyst bed disposed at the lowest of the two or more catalyst beds, for preventing a backflow of mixed gas; a distribution device disposed upstream from each one of the at least two catalyst beds for distributing the mixed gas to the catalyst bed; mixed gas supply lines arranged to supply the mixed gas to each distribution device; and a microwave heating device for emitting microwaves to each of the at least two catalyst beds.

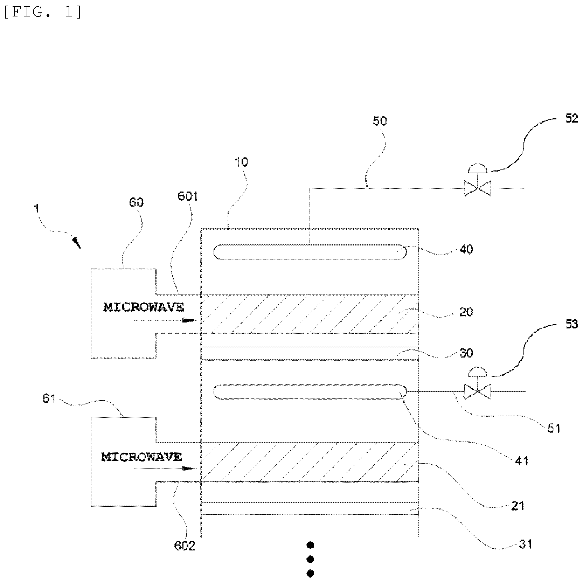

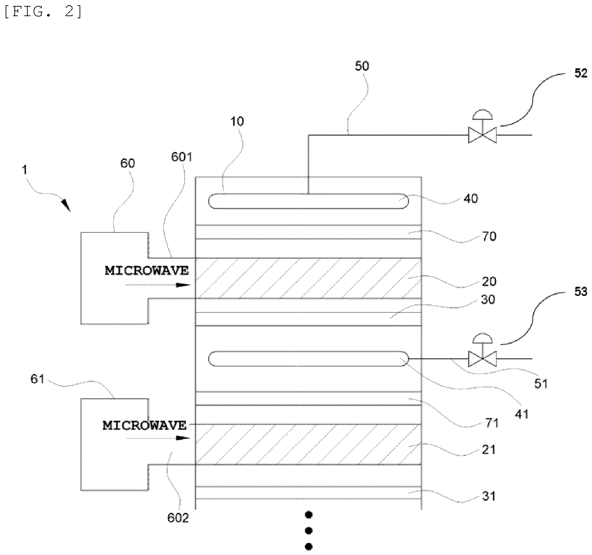

Referring to FIGS. 1 and 2, according to an embodiment of the present disclosure, there is provided an ammonia synthesis system 1 including an ammonia synthesis reactor 10, at least two catalyst beds 20 and 21 included in the ammonia synthesis reactor 10, a backflow prevention plate 30 or 31 disposed downstream from each one of the catalyst beds and preventing the backflow of the mixed gas, a distribution device 40 or 41 disposed upstream from each one of the at least two catalyst beds 20 and 21 for distributing the mixed gas to the catalyst bed 20 or 21, mixed gas supply lines 50 and 51 arranged to supply the mixed gas to each distribution device 40 or 41, respectively, and a microwave heating device 60 or 61 for emitting the microwaves to each of the at least two catalyst beds 20 and 21, respectively.

Hereinafter, the ammonia synthesis system including two catalyst beds may be described as an example of the ammonia synthesis system 1 of the present. However, as noted, the ammonia synthesis system may include multiple, e.g. two or more, for example, three, four, five, six, seven,... or ten catalyst beds.

This is indicated by the dotted lines in Figs. 1 and 2, noting that corresponding components like microwave heating device, mixed gas supply lines, flow regulating devices, distribution devices, backflow prevention plates (optionally except for the catalyst bed disposed at the lowest of the two or more catalyst beds) may independently be provided for each or some of the multiple catalyst beds.

The ammonia synthesis system according to an embodiment of the present disclosure may cope with the change in the flow rate that occurs during the production cycle by including the mixed gas supply line to supply the mixed gas to each of at least two catalyst beds. For example, the ammonia synthesis system may be operated by feeding the gas through the mixed gas supply line 50 disposed at the top for the gas to first pass through the catalyst bed 20 disposed at the top when the flow rate of the fed raw material is high, and operated by feeding the gas through the mixed gas supply line 51 disposed at the bottom for the gas to pass through the catalyst bed 21 disposed at the bottom rather than the catalyst bed 20 disposed at the top when the flow rate of the fed raw material is low. Here, the backflow of the mixed gas may be prevented by the backflow prevention plate 30 when the mixed gas is fed through the mixed gas supply line 51 disposed at the bottom for the gas to pass through the catalyst bed 21 disposed at the bottom.

Here, in the specification, the flow rate of the mixed gas feed that can be changed during the production cycle may be classified into three categories for convenience. As described above, the flow rate of the mixed gas feed may be classified into a low flow rate, a medium flow rate, and a high flow rate. However, the change in the flow rate may be easily regulated by the common sense or judgment of those skilled in the art. The low flow rate case indicates a case where the flow rate of the ammonia produced is less than half (50%) of an annual average production flow rate (100%), the medium flow rate case indicates a case where the flow rate is half (50%) or more and less than twice (200%) of the annual average production flow rate (100%), and the high flow rate case indicates a case where the flow rate is more than twice (200%) of the annual average production flow rate (100%), but the embodiments are not limited thereto.

In the low flow rate case as described above, there is no need to maintain a temperature of the entire reactor because the ammonia synthesis system may be operated by feeding the mixed gas through the mixed gas supply line 51 disposed at the bottom for the gas to pass through the catalyst bed 21 disposed at the bottom. Therefore, energy may be saved by optimizing the amount of energy required by the system as needed during its operation.

In addition, the ammonia synthesis system may increase the catalyst replacement cycle by using each catalyst bed uniformly during its operation. In general, when a reaction fluid has the low flow rate, distribution performance at the top of the catalyst bed may be reduced, which may cause the catalyst disposed even at the same height to have a different reaction performance. The catalyst replacement cycle may be determined by the reaction performance at the bottom of the catalyst bed, and the replacement cycle may become shorter if the reaction performance at some regions at the bottom of the catalyst bed is lowered due to lower distribution performance caused by a reduced flow rate. However, the catalyst replacement cycle may be increased by relatively uniformly using the catalyst beds if a height of the catalyst bed through which the gas passes is changed based on the flow rate and the distribution performance of each catalyst bed is improved, as in the ammonia synthesis system according to the present disclosure.

In addition, the ammonia synthesis system according to an embodiment of the present disclosure may include the microwave heating devices 60 and 61 to reduce temperature deviation between the central and outer parts of the catalyst bed at the beginning of its operation, thereby improving an ammonia synthesis yield. That is, the microwave heating devices 60 and 61 enable a uniform temperature deviation in the catalyst bed at the start of the operation of the catalyst bed thereby improving an ammonia synthesis yield. For example, the microwave heating device may significanlty reduce or fully eliminate temperature deviation between the central and outer parts of the catalyst bed by emitting the microwaves to the catalyst bed at the beginning of the operation. In addition, the microwave heating device may improve the ammonia synthesis yield at the beginning of the operation by preheating the catalyst bed that is not sufficiently preheated at the beginning of the operation.

For example, when the fed raw material has the low flow rate, the ammonia synthesis system may be operated for the gas to pass through the catalyst bed 21 disposed at the bottom rather than the catalyst bed 20 disposed at the top. Hence, when the mixed gas flow rate is a low flow rate (according to the above definition), then the mixed gas flow is not fed into the catalyst bed 20 disposed at the top of the amonia synthesis reactor 10, and as a result a temperature of the catalyst bed 20 may decrease over time. When the catalyst bed 20 is used again, after such decrease, when the flow rate of the mixed gas feed returns to a medium or high flow, the ammonia synthesis efficiency may be lower because the temperature of the catalyst bed 20 is decreased. The ammonia synthesis system of the present disclosure addresses this, by preheating the catalyst bed 20 disposed at the top of the ammonia synthesis reactor 10 by microwaves emitted by the microwave heating device 60, thus achieving excellent ammonia synthesis efficiency even when the catalyst bed 20 is used again when the mixed gas flow is reestablished to a medium or high flow after having been taken out of line when the mixed gas flow was low.

One or more microwave heating devices may be installed on each catalyst bed. For example, one or more, two or more, three or more, four or more, five or more, etc. may be installed on each catalyst bed, and the number of microwave heating devices is not limited thereto. The number of the microwave heating devices may be increased based on a size of the reactor and the size of the catalyst beds. Also, an installation location of the microwave heating devices may be adjusted for efficient microwave emission.

The ammonia synthesis system may further include microwave guides 601 and 602. Each of the microwave guides may enable the microwaves emitted by the microwave heating device to reach the catalyst bed more efficiently. The shape or installation location of the guide may be changed based on a microwave waveform.

The number of catalyst beds in the ammonia synthesis reactor 10 may be at least two, i.e., two or more. For example, in some embodiments, the number of catalyst beds in the ammonia synthesis reactor 10 may be three or more, four or more, five or more, six or more, seven or more, ..., ten or more, twenty or fewer, ten or fewer, eight or fewer, seven or fewer, six or fewer, five or fewer, four or fewer, three or fewer, two or fewer, or a value between these values. The number of catalyst beds and the number of distribution devices may be the same. That is, for each catalyst bed in the ammonia synthesis reactor 10, there is a corresponding distribution device positioned upstream from the catalyst bed for distributing the mixed gas feed more uniformly to the catalyst bed.

In an embodiment according to the present disclosure, the mixed gas may include at least one selected from the group consisting of hydrogen and nitrogen.

Hydrogen may be produced by a device powered by renewable energy. For example, hydrogen may be produced by a water electrolyzer powered using renewable energy.

Renewable energy may include at least one selected from the group consisting of solar energy, photovoltaic energy, bioenergy, wind energy, hydroelectric energy, geothermal energy, ocean energy, and waste energy. Renewable energy shows temporal variability. For example, solar energy is not available at night. Therefore, when hydrogen is produced using a device or process powered by renewable energy, the ammonia synthesis system 1 cannot be operated at a constant flow rate all the time. However, the ammonia synthesis system 1 of the present disclosure can cope with the change in the flow rate that occurs during the production cycle due to the temporal variability of renewable energy.

In addition, the mixed gas supplied through the mixed gas supply line 50 or 51 may have a low temperature. Therefore, the mixed gas supplied through the mixed gas supply line 50 or 51 may function as cooling mixed gas, and may also function as a means of cooling the mixed gas flowing in the ammonia synthesis system. For example, the mixed gas having the low temperature may be used as the cooling means to cool the mixed gas fed into the catalyst bed.

As illustrated in FIG. 2, the ammonia synthesis system according to an embodiment of the present disclosure may further include distribution plates 70 and 71 each disposed between the catalyst bed 20 or 21 and the distribution device 40 or 41. Specifically, distribution plate 70 is disposed between the catalyst bed 20 and the distribution device 40, while distribution plate 71 is disposed between the catalyst bed 21 and the distribution device 41.

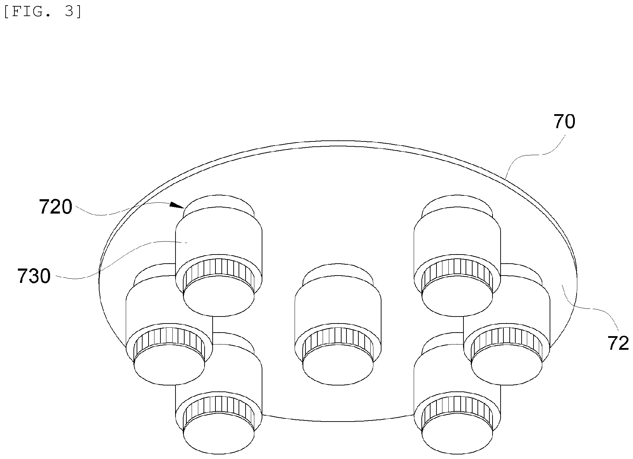

Referring to FIG. 3, the ammonia synthesis system 1, according to an embodiment of the present disclosure may further include a plurality of mixed gas flow pipes 720 which are fixed to a lower surface 72 of the distribution plates 70, 71 and through which the mixed gas flows.

The ammonia synthesis system 1 may further include the distribution plates 70, 71, and the mixed gas flow pipes 720, thereby obtaining a more uniform flow rate distribution upstream of the catalyst beds included in the ammonia synthesis reactor 10 even when the flow rate of the fed raw material such as hydrogen is reduced.

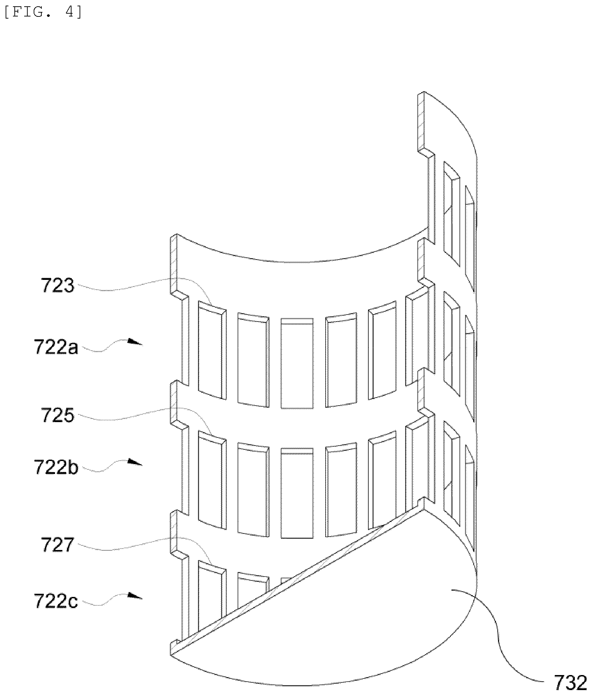

Referring to FIGS. 3 and 4, the mixed gas flow pipe 720 may have a bottom surface 732 and a side surface 722 (divided in 722a, 722b, 722c) connecting the bottom surface with the distribution plate.

The mixed gas flow pipe 720 may further include a plurality of upper openings 723 formed on a side surface of an upper part 722a of the mixed gas flow pipe 720. The upper openings may be spaced apart from each other along a circumference of the upper part 722a of the mixed gas flow pipe 720. The mixed gas flow pipe 720 may further include a plurality of middle openings 725 formed on a side surface of a middle part 722b of the mixed gas flow pipe 720. The middle openings 725 may be spaced apart from each other along the circumference of the middle part 722b of the mixed gas flow pipe 720. The mixed gas flow pipe 720 may further include a plurality of lower openings 727 formed on a side surface of a lower part 722c of the mixed gas flow pipe 720. The plurality of lower openings 727 may be spaced apart from each other along the circumference of the lower part 722c of the mixed gas flow pipe 720. A flow of the mixed gas may be formed through the upper openings 723, the middle openings 725, and the lower openings 727. The mixed gas flow pipe 720 may include a cover 730 surrounding at least some regions of the side surface of the mixed gas flow pipe 720 to provide a space for the fluid flowing out of the side surface of the mixed gas flow pipe 720 after passing through the upper openings 723 to be guided toward the middle openings 725. The cover 730 may surround at least one selected from the group consisting of the upper and middle parts of the side surface of the mixed gas flow pipe 720.

The cover 730 may cause the fluid flowing out of the side surface of the mixed gas flow pipe 720 after passing through the upper openings 723 to be guided toward the middle openings 725. This configuration may form a flow in which the fluid is moved to the outside of the side surface of the mixed gas flow pipe 720 and then moved back to the inside of the side surface of the mixed gas flow pipe 720. Through this meander-shape flow path, the fluids may be mixed more effectively and smoothly with each other. Better mixing is highly beneficial because it can increase the reaction rate and overall business efficiency. Better mixing can also improve catalyst utilization and reduce catalyst hot spots.

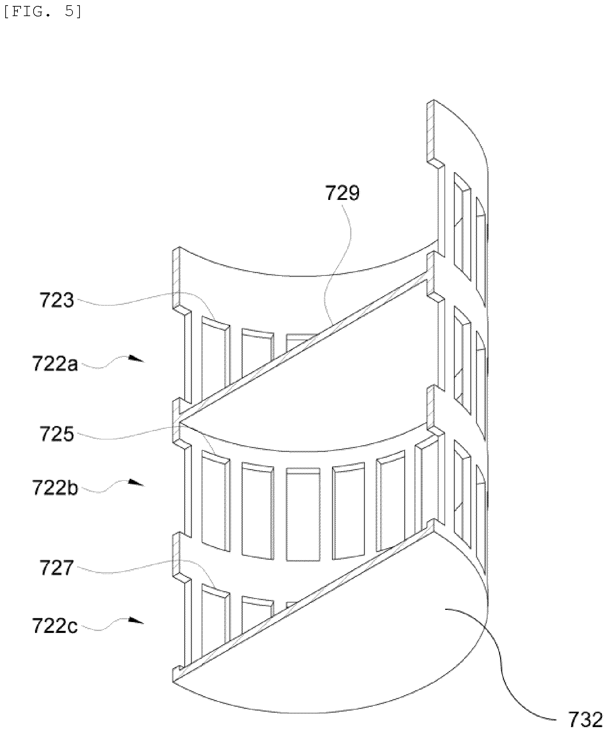

Referring to FIG. 5, the mixed gas flow pipe 720 may further include a separator plate 729 dividing the upper and middle parts of the mixed gas flow pipe 720 from each other. The separator plate 729 may completely separate the upper and middle parts of the mixed gas flow pipe 720 from each other to prevent the movement of the fluid. More specifically, the separator plate forces the fluid flow of the mixed gas which enters a mixed gas flow pipe 720 to exit the upper part of the mixed gas flow pipe 720 through the upper openings 723 into the side space created by the cover 730 and then back into the middle part of the mixed gas flow pipe 720 through the middle openings 725. Therefore, the fluid flowing into the upper part of the mixed gas flow pipe 720 may flow out through the upper opening 723 into the side space between the mixed gas flow pipe 720 and the cover 730 rather than descending directly to the middle part, because of the separator plate 729. The fluid inside the space may then flow into the mixed gas flow pipe through the middle openings 725, descend downwards, and flow out of the mixed gas flow pipe 720 through the lower openings 727. The fluid in the lower part of the mixed gas flow pipe 720 may not exit via the bottom surface 732 of the mixed gas flow pipe 720 and is forced to exit via the lower openings 727. As described above, the fluid may form the flow in which the fluid flows out of the mixed gas flow pipe 720, flows back into the inside of the pipe, and flows out of the pipe again, thereby mixing the fluids more effectively and smoothly, and maintaining the uniform flow rate distribution upstream of the catalyst bed. The distribution plates with the plurality of the mixed gas flow pipes provide an effective mixing of the hydrogen and nitrogen of the mixed gas in a passive and consistent way without any moving mechanical parts.

In an embodiment according to the present disclosure, each of the mixed gas supply lines 50 and 51 may include a flow regulating device 52 and 53. The flow regulating device may enable the flow rate of the mixed gas to be controlled independently in each of the mixed gas supply lines. For example, the flow regulating device 52 and 53 may independently regulate the flow rate of the mixed gas flowing through each of the mixed gas supply lines for the flow rate of the mixed gas entering the distribution device to be maintained within a desired flow rate range. The flow regulating device 52 and 53 may be a flow regulating valve. The flow regulating device 52 and 53 may include a plurality of flow regulating valves, e.g., one for each mixed gas supply line 50, 51 to each distributor plate 40, 41.

In an embodiment according to the present disclosure, each of the mixed gas supply lines 50 and 51 may branch from one main supply line (not shown). Alternatively, each of the mixed gas supply lines 50 and 51 may receive at least one gas selected from the group consisting of nitrogen and hydrogen from each of individual supply lines.

In an embodiment according to the present disclosure, each of the backflow prevention plates 30 and 31 may include a plurality of openings 302, and each of the plurality of openings 302 included in each of the backflow prevention plates 30 and 31 may have a backflow prevention cap 303 selectively opened based on a flow direction of the gas. The ammonia synthesis system according to the present disclosure may include the backflow prevention plate 30 or 31 having the backflow prevention cap 303, thereby preventing the backflow of the mixed gas even when the mixed gas is fed through the mixed gas supply line 51 disposed at the bottom to pass through the catalyst bed 21 disposed at the bottom. In addition, the system may be implemented to prevent the backflow of the mixed gas as described above to thus save energy by optimizing the amount of energy required by the system as needed during its operation, and increase the catalyst replacement cycle by using each catalyst bed uniformly.

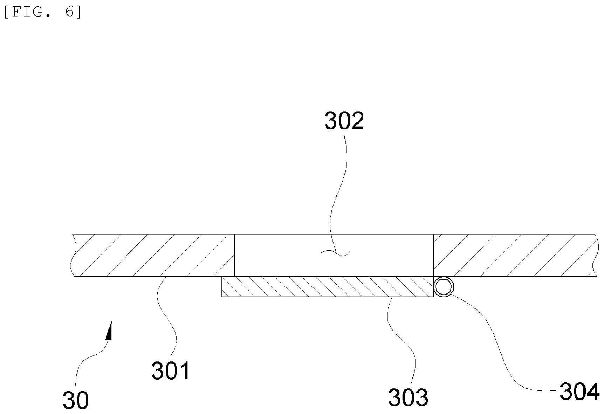

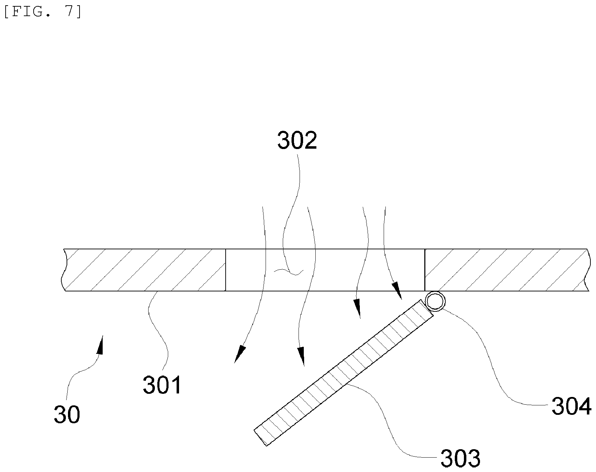

Referring to FIGS. 6 and 7, the backflow prevention cap 303 may be coupled to a hinge 304 disposed at a position on each circumference part of the plurality of openings 302 included in each of the backflow prevention plates 30 and 31. FIG. 7 shows a state where the backflow prevention cap 303, which is coupled to the hinge 304, is opened. When the mixed gas flows from a position upstream of the backflow prevention plate 30 or 31 to a position downstream of the backflow prevention plate 30 or 31, the backflow prevention cap 303 may be maintained to be opened, and the mixed gas may thus flow normally. FIG. 6 shows a state where the backflow prevention cap 303, which is coupled to the hinge 304, is closed. When the mixed gas is to flow from the downstream to upstream of the backflow prevention plate 30 or 31, the backflow prevention cap 303 may be closed by the flow of the mixed gas flowing from the downstream to the upstream. By this principle, the backflow prevention plate 30 or 31 according to the present disclosure may prevent the backflow of the mixed gas.

In an embodiment according to the present disclosure, a coupling part of the hinge 304 that is coupled to the hinge 304 may include a spring to apply an elastic force in a direction in which the backflow prevention cap 303 approaches the distribution plate.

In an embodiment according to the present disclosure, the distribution device 40 or 41 may have a disk shape. In another embodiment according to the present disclosure, the distribution device 40 or 41 may have a toroidal shape. However, the embodiments are not limited to these shapes only, and generally any conventional gas distribution device may be used.

In an ammonia synthesis method according to an embodiment of the present disclosure, ammonia may be synthesized at 1 to 500 bar or 10 to 300 bar.

In addition, in the ammonia synthesis method according to an embodiment of the present disclosure, ammonia may be synthesized at 100 to 800°C or 200 to 700°C. Further, the catalyst bed disposed at the top of the ammonia synthesis reactor may be preheated by microwaves emitted by the microwave heating device.

The ammonia synthesis system according to an embodiment of the present disclosure may further include a heat exchanger disposed downstream from each of the at least two catalyst beds to remove heat from an effluent of the catalyst bed. The heat exchanger may surround the catalyst bed or its surroundings. The ammonia synthesis system according to the present disclosure may include an additional heat removal means other than the supply of the cooling mixed gas by further including the heat exchanger. This configuration may enable the flexible operation of the ammonia synthesis system.

As set forth above, the ammonia synthesis system according to an embodiment of the present disclosure may cope with the change in the flow rate that occurs during the production cycle.

The ammonia synthesis system according to another embodiment of the present disclosure may maintain a uniform flow rate distribution upstream of the catalyst bed included in the ammonia synthesis reactor even when the flow rate of the raw material, such as hydrogen, fed into the ammonia synthesis system is decreased.

The ammonia synthesis system according to still another embodiment of the present disclosure may improve the ammonia synthesis yield by reducing or fully eliminating a temperature deviation between the central and outer parts of the catalyst bed at the start of its operation.

The ammonia synthesis system and a method for synthesizing ammonia using the ammonia synthesis system according to an embodiment of the present disclosure may improve the ammonia synthesis yield at the beginning of its operation by preheating the catalyst bed at the beginning of its operation.

The ammonia synthesis system according to an embodiment of the present disclosure may save the energy by optimizing the amount of energy required by the system during its operation.

The ammonia synthesis system according to an embodiment of the present disclosure may increase the catalyst replacement cycle by more uniform utilization of each catalyst bed during the operation.

The ammonia synthesis system according to an embodiment of the present disclosure may synthesize ammonia in an eco-friendly manner as a mixed gas generated at least partially from a process utilizing renewable energy.

The content described above are embodiments to which a principle of the present disclosure is applied, and may further include other embodiments within the scope of the present disclosure. Furthermore, the embodiments may be combined to form additional embodiments.

## Claims

1. An ammonia synthesis system comprising:
an ammonia synthesis reactor (10);
at least two catalyst beds (20, 21) included in the ammonia synthesis reactor (10);
a backflow prevention plate (30, 31) disposed downstream from each one of the catalyst beds (20, 21), optionally except for the catalyst bed disposed at the lowest of the two or more catalyst beds, for preventing a backflow of a mixed gas;
a distribution device (40, 41) disposed upstream from each one of the at least two catalyst beds (20, 21) for distributing the mixed gas to each one of the at least two catalyst beds (20, 21);
mixed gas supply lines (50, 51) arranged to supply the mixed gas to each distribution device (40, 41); and
a microwave heating device (60, 61) for emitting microwaves to each of the at least two catalyst beds (20, 21) .

2. The system according to claim 1, further comprising distribution plates (70, 71) each disposed between each one of the catalyst beds (20, 21) and a corresponding one of the distribution devices (40, 41).

3. The system according to claim 2, further comprising a plurality of mixed gas flow pipes (720) which are fixed to a lower surface of the distribution plate (70, 71) and through which the mixed gas flows.

4. The system according to claim 3, wherein the mixed gas flow pipe (720) has a bottom surface (732) and a side surface (722) connecting the bottom surface (732) with the distribution plate (70, 71),
a plurality of upper openings (723) are formed in a side surface (722) of an upper part (722a) of the mixed gas flow pipe (720) spaced apart from each other along a circumference of the pipe,
a plurality of middle openings (725) are formed in a side surface (722) of a middle part (722b) of the mixed gas flow pipe (720) spaced apart from each other along the circumference,
a plurality of lower openings (727) are formed in a side surface (722) of a lower part of the mixed gas flow pipe (720) spaced apart from each other along the circumference, and
optionally the mixed gas flow pipe (720) includes a cover (730) surrounding at least some regions of the side surface (722) of the mixed gas flow pipe (720) to provide a space for a fluid flowing out of the side surface (722) of the mixed gas flow pipe (720) after passing through the upper opening (723) to be guided toward the middle opening (725).

5. The system according to claim 4, wherein the mixed gas flow pipe (720) further includes a separator plate (729) dividing the upper and middle parts (722b) of the mixed gas flow pipe (720) from each other.

6. The system according to one of claims 1 to 5, wherein each of the mixed gas supply lines (50, 51) includes a flow regulating device (52, 53).

7. The system according to one of claims 1 to 6, wherein each of the backflow prevention plates (30, 31) includes a plurality of openings (302), and
wherein each of the plurality of openings (302) included in each of the backflow prevention plates (30, 31) has a backflow prevention cap (303) selectively opened based on a flow direction of the gas.

8. The system of claim 7, wherein the backflow prevention cap is coupled to a hinge (304) disposed at a position on each circumference part of the plurality of openings (302) included in each of the backflow prevention plates (30, 31), preferably wherein a coupling part of the hinge (304) that is coupled to the hinge (304) includes a spring to apply an elastic force in a direction in which the backflow prevention cap (303) approaches the distribution plate (70, 71).

9. The system according to one of claims 1 to 8, wherein the distribution device (40, 41) has a disk shape or a toroidal shape.

10. The system according to one of claims 1 to 9, further comprising a heat exchanger disposed downstream from each of the at least two catalyst beds (20, 21) to remove heat from an effluent of the catalyst bed (20, 21).

11. The system according to one of claims 1 to 10, wherein the heat exchangers surrounds the catalyst bed.

12. A method for synthesizing ammonia using the ammonia synthesis system according to any one of claims 1 to 11.

13. The method according to claim 12, wherein the mixed gas fed to the ammonia synthesis system is generated at least partially from a process employing renewable energy, and wherein ammonia is synthesized in the ammonia synthesis system at 10 to 300 bar, and/or wherein ammonia is synthesized in the ammonia synthesis system at 200 to 700°C.

14. The method according to one of claims 13 to 14, wherein the catalyst bed (20) disposed at the top of the ammonia synthesis reactor (10) is preheated by microwaves emitted by the microwave heating device (60).

15. An ammonia synthesis system comprising:
an ammonia synthesis reactor (10) comprising first and second catalyst beds (20, 21) and receiving a first mixed gas comprising the made hydrogen from the eco-friendly process;
a first backflow prevention plate disposed downstream from the first catalyst bed for preventing a backflow of the mixed gas;
a distribution device (40, 41) disposed upstream from each one of the first and second catalyst beds (20, 21) for distributing the mixed gas to each one of the first and second catalyst beds (20, 21);
a first mixed gas supply line and a second mixed gas supply line configured to supply the mixed gas to the first and second catalyst beds (20, 21) respectively; and
a microwave heating device (60, 61) for emitting microwaves to each of the at least two catalyst beds (20, 21) .
